(19)

Europäisches
Patentamt
European
Patent Office
Office européen
des brevets

(11) EP 4 383 177 A1

(12) EUROPEAN PATENT APPLICATION

(43) Date of publication:
**12.06.2024 Bulletin 2024/24**

(21) Application number: **22315310.7**

(22) Date of filing: **06.12.2022**

(51) International Patent Classification (IPC):
**G06Q 30/0251** (2023.01)

(52) Cooperative Patent Classification (CPC):
**G06Q 30/0255**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Amadeus S.A.S.**
**06410 Biot (FR)**

(72) Inventors:
• **Cao, Hongliu**
**06300 Nice (FR)**
• **El Baamrani, Ilias**
**75017 Paris (FR)**
• **Thomas, Eoin**
**06600 Antibes (FR)**

(74) Representative: **Samson & Partner Patentanwälte mbB**
**Widenmayerstraße 6**
**80538 München (DE)**

(54) **USER REPRESENTATION FOR MATCHING**

(57) Methods, systems, and computer program products for determining user representations based on matching. A matching request associated with a user is received. Event search data for a plurality of events for the plurality of users is obtained. A merged user representation for a plurality of candidates associated with the plurality of users is generated based on the event search data. A subset of candidates from the plurality of candidates is selected based on the merged user representation. Pairwise features are determined based on similarities between the subset of the candidates. A learned user representation is determined by identifying, using a machine learning algorithm, at least one user of the plurality of users from the subset of the candidates based on the pairwise features. The learned user representation associated with the at least one identified user of the plurality of users is provided.

FIG. 1

**Description**

**TECHNICAL FIELD**

The present invention generally relates to computers and computer software, and more specifically, to methods, systems, and computer program products for determining user representations for accurate records matching.

**BACKGROUND**

Online (e.g., web-based, mobile, or in-app) advertising differs from advertising in traditional media in its degree of personalized audience targeting. For example, while broadcast media advertising, such as television advertising, aims to reach a target demographic defined by broad characteristics such as age-group, socioeconomic status, and/or general interests, online advertising aims to reach individuals having a particular interest in the product, service, or information that is presented.

Highly personalized audience targeting technology has led to the development of business models that are specific to online advertising. For example, it is now common for websites that provide news, aggregated information, and other content of interest to targeted users, to host third-party advertisements as a means for generating revenue. Advertisers whose advertisements appear on these websites may pay the operator on the basis of viewing opportunities or impressions (commonly measured as 'cost per thousand impressions', a.k.a. CPM), on the basis of a cost per click (CPC), or according to some other measure of performance. The actual selection of an advertisement to be placed on a web page presented to an individual user may be based, at least in part, on a bidding process whereby an advertiser who is willing to pay a higher CPM, CPC, or other cost measure, is more likely to have its advertisement presented to the user.

According to one common model, the bidding process is facilitated by an 'ad exchange platform'. An ad exchange is a technology platform that implements a digital marketplace allowing advertisers and publishers of web sites and other online content to buy and sell advertising space, often through real-time auctions.

An ad exchange maintains a 'pool' of ad slots. Publishers contribute their ad slots, e.g., available advertising slots embedded within web pages served to users, into the pool. Buyers can then bid for the slots that they wish to purchase. Bidding decisions are often made in real time based on information such as the previous behavior of the user while an ad is being served to, time of day, device type, ad position, and so forth. In practice, these bidding decisions must themselves be made very rapidly, e.g., in at most a few tens of milliseconds, using technology platforms commonly known as demand side platforms (DSPs). Since there is a real cost to the advertiser in purchasing impressions through an ad exchange, the performance of technologies and algorithms deployed in a DSP for assessing the potential 'value' of a user to make a bid decision may have a significant business impact.

By way of example, an average click through rate (CTR) for web-based display ads is around 0.05%, i.e., five clicks per 10,000 impressions. Where ad slots are purchased via an ad exchange, every impression represents a cost (i.e., the price paid following a winning bid). However, where a CPC model is employed, only 0.05% of impressions, on average, result in the generation of revenue. A low CTR thus results in an inefficient use of technical resources (such as the processing resources of the DSP) and a higher cost to successful advertisers (since a smaller number of 'clicks' must cover the cost of all impressions). Furthermore, a low CTR is indicative of a lack of suitability or relevance of the displayed advertising to online users.

It is, therefore, highly desirable to deploy technologies in DSP platforms that result in higher CTR. Such technologies benefit DSP operators by enriching the utilization of technical resources and increasing revenues generated from user interactions with advertising content. Advertisers also benefit from more effective and successful placement of ads, resulting in greater click-through, and delivery of a larger audience of potential interested customers. Online users also benefit, since higher CTR is generally achieved by placement of ads having greater suitability and relevance to users.

For the travel industry, for example, more and more traveler's data are collected during the entire travel journey, from pre-booking till post-trip. Among which, the richest information that can help travel providers better understand travelers is behavior data, such as search history during inspiration and interactions with future bookings during post-booking. Search history prior to making a booking decision can be useful, for example, for a better understanding of traveler's behaviors during inspiration so that appropriate suggestions can be made. Interactions with future bookings after the conversion also give great insight into how travelers interact with products and prepare their trips. However, the travel data, specifically the behavior data, normally lacks personal identifiable information (PII). Specifically, the online travel industry data is more challenging to analyze because of extra sparseness and dispersed user histories. For example, travelers' data may be highly dispersed across the travel journey (e.g., multiple emails, accounts, user IDs, etc.).

internet cookies are used by web browsers to track online activity including previous searches. However, several travelers may perform travel searches on the same device, or conversely a traveler may perform a cookie clearing action, meaning a new cookie is generated for the subsequent search. A user can have over ten different cookie IDs in one year, which means that the search history of this user is dispersed, especially since a traveler may use multiple devices to perform additional searches (e.g., mobile phone, personal computer, tablet, etc.). Thus, given the decline in using third party cookies (e.g., because of cookie cleaning implementations) and the use of multiple devices, there is a need to better understand user interactions with travel search requests (e.g., match the same users with high confidence) without resorting to third party cookies.

Moreover, because of regulations for privacy, especially in the travel industry (e.g., EU law has the general data protection regulation (GDPR)), there are many restrictions on using PII data, and deterministic matching, which mainly uses PII data, is not always available (e.g., privacy concerns, lack of PII data, difficulty of guaranteeing log-in account, etc.). Thus, improved methods, systems, and computer program products are needed for identifying a traveler using behavior data without using PII data.

**SUMMARY**

In embodiments of the invention, a method for determining user representations for accurate records matching. The method includes receiving, at a data matching server, a matching request associated with a user of a plurality of users. The method further includes obtaining, based on the matching request, event search data for a plurality of events for the plurality of users, the event search data including one or more sets of search event attributes for the plurality of users. The method further includes generating a merged user representation for a plurality of candidates associated with the plurality of users based on the event search data. The method further includes selecting a subset of candidates from the plurality of candidates based on the merged user representation. The method further includes determining pairwise features based on similarities between the subset of the candidates. The method further includes determining a learned user representation by identifying, using a machine learning algorithm, at least one user of the plurality of users from the subset of the candidates based on the pairwise features, wherein the machine learning algorithm determines matching probabilities associated with the at least one identified user of the plurality of users. The method further includes providing the learned user representation associated with the at least one identified user of the plurality of users.

These and other embodiments can each optionally include one or more of the following features.

In some embodiments of the invention, generating the merged user representation for the plurality of candidates associated with the plurality of users includes determining similarity matrices for each candidate by creating embeddings for each user based on the event search data. In some embodiments of the invention, generating the merged user representation for the plurality of candidates associated with the plurality of users is based on natural language processing of the event search data.

In some embodiments of the invention, the event search data includes a plurality of search history addresses, and wherein generating the merged user representations for the plurality of candidates includes generating a token for each search history address, generating combinations of consecutive tokens, randomizing an order of the combinations of consecutive tokens, and determining the merged user representations for the plurality of candidates based on the randomized order of the combinations of the consecutive tokens utilizing natural language processing techniques.

In some embodiments of the invention, selecting the subset of candidates from the plurality of candidates based on the merged user representation includes filtering the plurality of candidates for potential candidates for each of the plurality of candidates using the similarity score calculated from the associated merged user representation.

In some embodiments of the invention, the search event attributes associated with the user and the plurality of users includes non-personal identifying information. In some embodiments of the invention, the search event attributes include behavioral data associated with the plurality of users.

In some embodiments of the invention, the behavioral data includes at least one of interactions with one or more websites associated with the event, a session duration, and content displayed during the interaction with the one or more websites.

In some embodiments of the invention, determining the pairwise features based on similarities between the subset of the candidates includes determining multiple sets of features.

In some embodiments of the invention, the multiple sets of features include user preference information, user behavior information, similarity information, or a combination thereof.

In some embodiments of the invention, the machine learning algorithm includes a binary classifier configured to identify and remove duplicate associations between a first candidate and a second candidate associated with the same user based on the pairwise features.

In some embodiments of the invention, providing the learned user representation includes providing expected click through rate (CTR) data associated with the user based on the learned user representation.

In some embodiments of the invention, the plurality of events are associated with a travel event, and the event search data includes travel information based on each travel event.

In some embodiments of the invention, the event search data includes origin and destination information, a user identification (ID), a departure date, a trip duration, or a combination thereof.

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

**BRIEF DESCRIPTION OF DRAWINGS**

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.

Figure 1 illustrates an environment for implementing a process for identifying a user using behavior data without using PII data, according to embodiments of the invention.

Figure 2 illustrates an example of determining user matching results based on a matching request, according to embodiments of the invention.

Figure 3 illustrates an example process for generating a merged user representation, according to embodiments of the invention.

Figure 4 illustrates an example for determining a traveler representation learning solution to identify travelers using behavior data, according to embodiments of the invention.

Figure 5 is a flowchart of an example process for determining user representations based on matching, according to embodiments of the invention.

Figure 6 is a flowchart of a method of offline training in accordance with embodiments of the invention.

Figure 7 illustrates a graph of variables utilized in a gradient boosted machine (GBM) model used to determine a traveler representation, according to embodiments of the invention.

Figure 8 is a block diagram showing an example computer architecture for a computer capable of executing the software components described herein, according to embodiments described herein.

**DETAILED DESCRIPTION**

Merchants, such as travel providers, facilitate commercial activity online to increase internet advertisement revenue. However, as online solutions in the travel industry multiply, analyzing and understanding travelers' behavior becomes more important. However, traveler data inherently suffers from sparsity due to the relatively low frequency of user's interactions and also from dispersion with the multiplication of devices, accounts and platforms while browsing online. For example, analyzing online traveler's data is very challenging due to the following reasons. Traveler's data are sparse, because unlike other e-commerce solutions where a lot of searches and purchasing histories are made during a short period like one month, in the travel industry, a passenger may only reserve fight tickets once or twice a year. Additionally, traveler's search history is dispersed and fragmented across platforms (e.g., travelers often book flight tickets, train, hotel, activities on different platforms), across different accounts (e.g., a user can have multiple accounts with different emails), and across different devices (e.g., as the variety of devices increases, travelers nowadays often have multiple devices such as desktops, laptops, smartphones, tablets, etc.).

The fragmented data break traveler's online behavior history into many small non-connected pieces, which contributes to the sparseness of the data. Therefore, building an accurate traveler profile and understanding correctly the traveler's needs based on the dispersed data is very difficult. One implementation of the invention is to match those users to build an accurate traveler profile and understand traveler's needs. With the GDPR restrictions, one can no longer depend on personal identifiable information (PII) such as email, passport, or name, to do a deterministic matching. Thus, improved methods, systems, and computer program products for providing systems for identifying a traveler using behavior data without using PII data are provided herein.

The technology in this patent application is related to systems and methods for implementing a user identification system based on behavioral data without the use of PII and by using matching algorithms. In some implementations, the matched information may be utilized to restore a recent search session or pre-fill some information (personalization), and/or to recover previous searches and bookings in order to propose content (recommender system). Additionally, for advertising use cases, the user matching information can also help build better user profiles and segmentation of travelers.

The invention was designed and validated based on data from a large online travel agency. The first step is traveler representation learning, where user representations are built that incorporates users' online behaviors. Unlike recent works on the subject that focus on sequence embeddings, in some implementations of the invention, representations may be built that deals with the sparsity of traveler data. For example, to improve the performance of these representations, complementary information may be taken advantage of based on information fusion. A candidate selection based on similarities may be performed to reduce the number of candidates to be processed. Sets of features may be utilized to boost the matching performance. Finally, a pairwise classification may be performed to determine if two profiles are from the same user or not. Thus, embodiments of the invention provide a traveler representation which uses multi-level information fusion by taking advantages of complementary information. In some implementations, the traveler representation quality is enhanced by combining an unsupervised representation learning with a supervised representation learning (e.g., via Siamese networks).

Advantageously, embodiments of the invention may employ a machine learning model for determining a traveler representation learning solution that goes beyond the limitations for the travel industry. For example, some limitations include PII data which is difficult to guarantee especially in the user inspiration phase, and the additional challenges of matching on traveler data, such as sparsity and dispersion, which prevent from utilizing sequential models. The traveler representation learning solution uses an unsupervised URL representation more adapted to traveler's URLs. The representation may be improved with a Siamese Network to make it specialized to the traveler matching task. Other features are then used to enrich matching capabilities based on an information fusion technique. Finally, a candidate selection is used to reduce the number of possible comparisons before building pairwise features to boost the performance of traveler matching using a binary classifier.

More specifically, this technology includes a process that receives, at a data matching server, a matching request (from a requestor) associated with a user (a traveler) of a plurality of users (e.g., the requestor may be any user's console for the event/trip provider, airline agency, travel agency, metasearch engine, other GDS, or based on the location of the requestor). The process further obtains, based on the matching request, event search data for a plurality of events for the plurality of users, the event search data including one or more sets of search event attributes (e.g., behavioral data) for the plurality of users. The process further generates a merged user representation for a plurality of candidates associated with the plurality of users based on the event search data (e.g., embeddings are created for each user incorporating online behaviors (user interest, habits, preferences, etc.)). The process further selects a subset of candidates from the plurality of candidates based on the merged user representation (e.g., filter potential candidates for each user using the user similarity calculated from the previous representation). The process further determines pairwise features based on similarities between the subset of the candidates (e.g., design three sets of features such as travel preferences, traveler behaviors, and similarities). The process further determines a learned user representation by identifying, using a machine learning algorithm, at least one user of the plurality of users from the subset of the candidates based on the pairwise features, wherein the machine learning algorithm determines matching probabilities associated with the at least one identified user of the plurality of users (e.g., build a binary classifier to tell if given pair of travelers are the same person or not, taking into class imbalance into consideration). The process further provides the learned user representation associated with the at least one identified user of the plurality of users (e.g., provide a learned traveler representation(s) to the requesting entity, advertiser, recommender, metasearch engine, etc., which can be used for improved inspiration and search experience, traveler clustering, segmentation and profiling, improving recommender system, and advertising use cases, and the like).

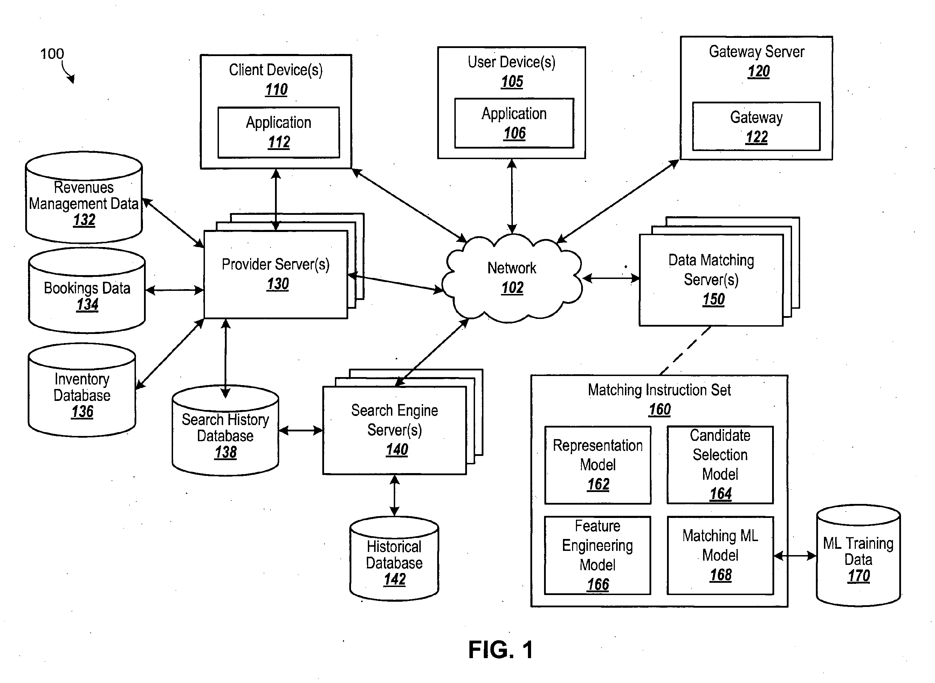

**Figure** 1 is an example environment 100 for implementing a process for identifying a user using behavior data without using PII data, according to embodiments of the invention. The example environment 100 includes a client device 110, a user device 105, a gateway server 120, one or more provider server(s) 130, one or more search engine server(s) 140, and one or more data matching server(s) 150, that communicate over a data communication network 102, e.g., a local area network (LAN), a wide area network (WAN), the Internet, a mobile network, or a combination thereof.

The user device 105 (e.g., an electronic device used by a user, such as a traveler booking a trip) and the client device 110 (e.g., an electronic device used by a requestor) can include a desktop, a laptop, a server, or a mobile device, such as a smartphone, tablet computer, wearable device (e.g., smartwatch), in-car computing device, and/or other types of mobile devices. The user device 105 includes applications, such as the application 106, for managing and booking a travel request with the one or more merchants associated with the one or more travel provider server(s) 130 (e.g., airlines, hotel, rental car, etc.). The client device 110 includes applications, such as the application 112, for managing a matching request and matching results to/from the one or more data matching server(s) 150 via the gateway server 120. The client device 110 can include other applications. The client device 110 (e.g., a travel merchant) initiates a matching request by a requestor via application 112. A matching request may include availability search queries by requesting entities (such as clients, applications, browsers installed on user terminals, etc.) in the course of a search (e.g., airline booking search). Additionally, a matching request may include an in-application matching request after a travel booking has been initiated and/or completed. A requestor of a matching request with a client device 110 via an event provider server 130 may include an airline agency, travel agency, metasearch engine, other dedicated global distribution systems (GDS), as for example airlines reservation systems which provide flight search applications for shopping business like flight booking, and the like that want to provide a traveler with recommendations to add to his or her travel itinerary.

The gateway 122 of the gateway server 120 manages the location of booking requests received from an application from the one or more user devices (e.g., a traveler's device) and matching requests received from application 112 from the one or more client devices 110. The management protocols of the gateway server 120 may be based on a redundant load-balancing system by managing multiple clients (e.g., client device(s) 110) so that a matching request is handled by one of the one or more data matching server(s) 150. For example, there may be multiple data matching server(s) 150 that are able to service the matching request, and the redundant load-balancing system of the gateway server 120 is responsible for ensuring that the matching request is performed by one of the capable data matching server(s) 150.

The gateway server 120 may be a front-end server for managing, collecting, processing, and communicating availability queries (e.g., matching request), resource information, revenues management data, bookings data, airlines/system configurations data, etc., that is stored in the historical database 142 from one or more search engine server(s) 140. The one or more search engine server(s) 140 may include travel agencies or similar search providers (e.g., online travel agencies, metasearches, tour operators, and the like). Further, the gateway server 120 may be front end server for managing, collecting, processing, and communicating matching results from one or more data matching server(s) 150 to the client devices 110 via application 112.. In an exemplary embodiment, for an airline booking example, the gateway server 120 may be a front end server for collecting, processing, and storing travel information (e.g., flight schedules, flight information such as such as departure and destination airport, airline, departure and return dates, fares, booking classes, passenger information, and the like) from a plurality of external travel systems (e.g., airport information systems, airline information systems, third-party intermediator systems, etc.) via the one or more event provider server(s) 130, the one or more search engine server(s) 140 to access the collective historical database 142, and/or the one or more data matching server(s) 150.

The one or more event provider server(s) 130 receives and processes travel inventory data such as revenue data stored in a revenues management database 132 from one or more revenue management system(s),.bookings data stored in a bookings database 134 from one or more bookings management system(s), airlines/system inventory data from an inventory database 136 from one or more airlines/system configurations management system(s), and the like as real-time market data. The one or more event provider server(s) 130 stores the travel inventory data from the multiple sources (e.g., revenues management database 132, bookings database 134, inventory database 136, etc.) in the historical database 142 for historical market data. Additionally, event logs are stored in the search history database 138 that can be accessed by an event provider server 130 and/or a search engine 140. The event logs may be collected from applications/websites that may contain rich behavioral data (e.g., data about user interaction with the applications/websites).

The one or more data matching server(s) 150 receives and processes, via the matching instruction set 160, the matching request(s) from the gateway server 120. The matching instruction set 160 includes a representation model 162, a candidate selection model 164, a feature engineering model 166, and a matching machine learning model 168.

The matching instruction set 160 is configured to implement determining user representations based on matching protocols as described herein. In some implementations, the matching instruction set 160 via the representation model 162, provides user representation learning. For example, embeddings may be created for each user incorporating his or her online behaviors (e.g., user interest, habits, preferences, etc.).

In some implementations, the matching instruction set 160 via the candidate selection model 164, filters potential candidates for each user using the user similarity calculated from the previous representation. For example, the candidate selection model 164.

In some implementations, the matching instruction set 160 via the feature engineering model 166, constructs pairwise features based on similarities. For example, the feature engineering model 166 can divide a record to be matched into different types of feature categories. For example, for the travel industry: traveler preference, traveler behavior, and traveler similarities. Of those feature categories, each may be broken down into subcategory features as further discussed herein.

In some implementations, the matching instruction set 160 via the matching machine learning model 168, utilizes one or more machine learning methodologies to output matching probabilities. For example, after pairwise features are constructed from the feature engineering model 166, the matching machine learning model 168 may use a binary classifier and improve the user representation (e.g., via a Siamese Network) to make it specialized to a particular matching task (e.g., a traveler matching task).

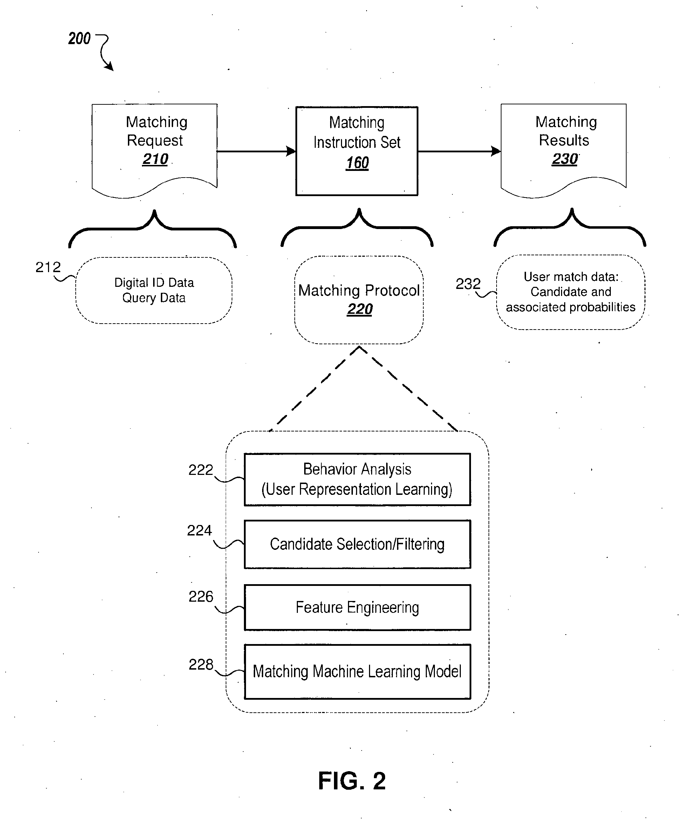

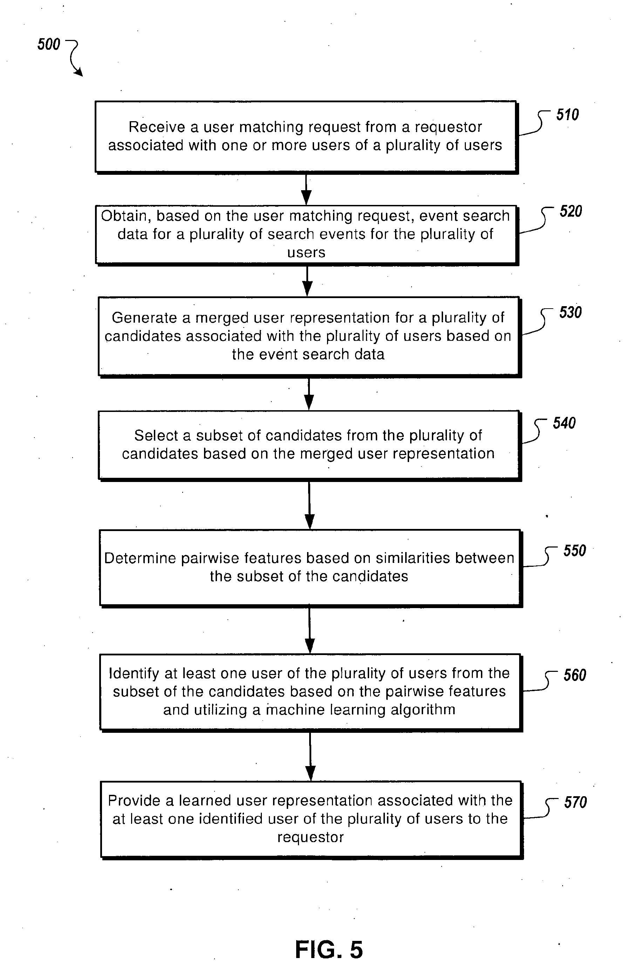

An example routine of implementing a user representation learning based on a matching protocol as illustrated in the environment of Figure 1 is further discussed herein with reference to the illustrations in Figures 2-4 and via the process flow diagram of Figure 5.

**Figure 2** illustrates an example user representation process based on a matching request, according to embodiments of the invention. In particular, Figure 2 illustrates an example environment 200 for implementing a user representation determination process based on a matching request to determine matching results 230 based on receiving a matching request 210. An objective for the matching instruction set 160 is to determine a user representation learning solution that goes beyond the limitations of PII data (which are difficult to guarantee), and the additional challenges of matching on data (e.g., traveler data) that are sparse and dispersed, which may prevent utilizing sequential models. For example, the matching instruction set 160, stored on a data matching server 150, receives a matching request 210 (e.g., from a client device 110). The matching request 210 for a particular event may include available identification data, and other features associated with the particular query (e.g., a travel query).

The matching instruction set 160 initiates determining of a user representation based on a matching protocol 220 to generate matching results 230. In some implementations, the matching protocol 220 may include, for example, a behavior analysis module 222, a candidate selection/filtering module 224, a feature engineering module 226, and a matching machine learning model 228 to implement the processes. For example, the behavior analysis module 222 (e.g., user representation learning) may create an embedding for each user incorporating his or her online behaviors (e.g., user interest, habits, preferences, etc.). The candidate selection/filtering module 224 can filter potential candidates for each user using the user similarity calculated from the previous representation. The feature engineering module 226 can construct pairwise features based on similarities based on dividing an industry into types of feature categories and subcategories. The matching machine learning model 228 can take advantage of the user representation to make it specialized to a particular matching task based on one or more machine learning techniques, as further described herein.

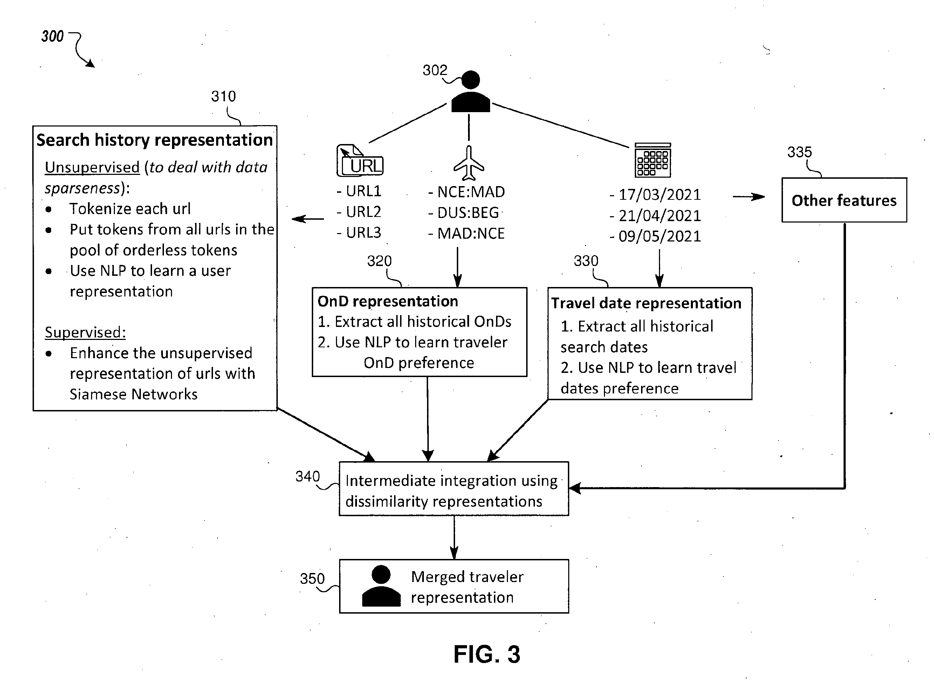

**Figure 3** illustrates an example environment 300 for generating a merged traveler representation, according to embodiments of the invention. Operations of the process illustrated in environment 300 can be implemented, for example, by a system that includes one or more data processing apparatus, such as the data matching server 150 of Figure 1. The process can also be implemented by instructions stored on computer storage medium (e.g., representation model 162 of the matching instruction set 160), where execution of the instructions by a system that includes a data processing apparatus cause the data processing apparatus to perform the operations of the process of environment 300.

Example environment 300 illustrates generating a merged traveler representation based on a user 302 entering a travel search query. The search query may include information such as a URL from the device the user 302 uses, the origin and destination (OnD) for the requested travel, and a date of travel. For example, the traveler data may include universally unique identifiers (UUIDs) and their associated events, and the mapping data linked emails and cookieIDs. Additionally, valid matched emails may have at least two cookieIDs, and valid matched UUIDs may have corresponding cookieIDs. Each cookieID may be associated with a list of events that describe all the actions and interactions that the traveler has done. Each event may be composed of physical and behavior data including physical features (e.g., device information (i.e., model, browser, operating system, etc.), geographic information, website language, etc.) and behavioral data (e.g., URL, timestamp, origin airport, destination airport, flight dates, number of passengers, product type, product name, URL search level, etc.).

A representation system, such as representation model 162, can generate-representations based on the original search information. In particular, one of the most data rich sources are from the URL of the search as illustrated by the search history representation 310. An example protocol for determining the search history representation 310 for a travel search query (to handle sparse data) may include: 1) tokenizing each URL (tk1, tk2, ..., tkN) with specially designed separators for travel data; 2) combining two consecutive tokens as one new token (tk12, tk23, ...); 3) placing tokens from all URLs in the pool of orderless tokens; and 4) using natural language processing (NLP) to learn a user representation for the search history.

In some implementations, an OnD representation 320 can be determined from the OnD information provided by extracting all historical OnDs and using NLP to learn a traveler's OnD preferences. A travel date representation 330 can be determined from the travel date information provided by extracting all historical search dates and using NLP to learn a travel date preference. At the intermediate block 340, taking advantage of the complementary information from other features 335 (e.g., information related to the search query), intermediate integration can be utilized using dissimilarity representations. Then at block 350, a merged traveler representation can be generated based on one or more different models discussed herein. For example, table 11 provides different accuracy levels for each of the merged representations for an information fusion technique, further discussed herein. For example, similarities matrices can be merged by computing their average and two users that have a high similarity in all user×user matrices are more likely to form a match. This information fusion technique may provide an improvement of the TopN accuracy as different features are added (e.g., proposed URL + OnD + date). Adding the unsupervised URLs representation in the end allows to improve the scores, which suggests that a small part of the information lost during the training of the Siamese network can be made up with the fusion information provided by the information fusion technique for generating the merged traveler representation at block 350.

For the purposes of evaluation metrics for the example environment 300, a TopN accuracy may be used to measure the performances of the traveler representation learning. Additionally, the F1-measure, on the other hand, may be an indicator evaluating the overall quality of the inference model. In an exemplary implementation, for user representation learning for the TopN accuracy, a framework may be built to learn semantic vectors $u_i$ of dimension d that represent a user's patterns and preferences. Giving each user representation, a user×user similarity matrix may be built. For example, the similarity matrix may be: $S = [s_{u,v}]^{n \times n}$ of n users where $s_{u,v}$ was the similarity value between vector representations of user *u* and user *v*. In some implementations, a cosine similarity equation may be used for high-dimensional positive spaces, where:

$$s_{u,v} = \frac{\sum_{i=1}^{d} u_i v_i}{\sqrt{\sum_{i=1}^{d} u_i^2 \sum_{i=1}^{d} v_i^2}}$$

Based on the user×user similarity matrix, the quality of the vectors may be evaluated by calculating, on average, the percent-age of correct matches cached in the TopN similar users (referred to herein as metric TopN accuracy). For example, if the top 5 similar users of the user u from the similarity matrix may be users [a,e,p,l,h] and the ground truth may be [e,z], the TopN accuracy is 0.5 (e.g., only half of the ground truth in the top 5 similar users). Average accuracies may be calculated for n users and used to report as an evaluation metric for the quality of the representations.

Precision and recall may be directly determined from a confusion matrix. **Table 1** provides an example confusion matrix.

**Table 1: Confusion Matrix**

| | | Positive | Negative |
|---|---|---|---|
| Predicted | Positive | True positive | False positive |
| | Negative | False negative | True negative |

For example, precision attempts to determine a proportion of positive identifications that was actually correct, and may be calculated based on the following equation:

$$\text{Precision} = \frac{\text{True positive}}{\text{True positive} + \text{False positive}}$$

Recall attempts to determine a proportion of actual positives that was identified correctly, and may be calculated based on the following equation:

$$\text{Recall} = \frac{\text{True positive}}{\text{True positive} + \text{False negative}}$$

An F1 score may be calculated based on the harmonic average of precision and recall, and may be calculated based on the following equation:

$$\text{F1} = \frac{2 \times \text{Precision} \times \text{Recall}}{\text{Precision} + \text{Recall}}$$

As discussed herein, user representations for a traveler may be built that incorporates a user's online behaviors. In an exemplary implementation, URLs, origin and destination airports, flight dates, geographic information, and device information were used to build six traveler representations. To take advantage of the complementary information, the similarities may be merged and derived from behavioral data to enhance the traveler representation scores.

For the purposes of determining representation learning from URLs, URLs browsed by users were the most important information for determining behaviors of a user (e.g., a traveler). The URLs can be very heterogeneous, as they don't have necessarily the same structure. To take advantage of the information present within the URLs, a tokenization may be realized using the separators "://" or "/" or "://1" or ";" or "&" or "from=" or "to=". The separators "to=" and "from=" may be utilized to take into account hidden information in round trips. If a traveler was going from Nice airport to Paris Orly airport and was doing a round trip, keeping the tokens "from=NCE" and "to=ORY" may reduce the likelihood of matching the traveler if he or she makes a return trip. In some implementations, the token extraction may be performed at the event level, and the targeted traveler representation may be performed at cookieID level.

Unsupervised learning may be utilized in the process for representation learning from URLs for extracting embeddings from the URLs. The tokens may be extracted from the URLs for each cookieID together to form the pool of tokens. Term frequency-inverse document frequency (tf-idf) may be utilized as a numerical statistic that was intended to reflect how important a word was to a document in a collection. The following term-frequency equation and the subsequent inverse document frequency equation may be utilized:

$$tf(t, d) = \frac{n_{t,d}}{\Sigma_k n_{k,d}} \qquad idf(t) = \log \frac{|D|}{|d \in D : t \in d|}$$

where $nt, d$ is the frequency of apparition of term $t$ in document $d$ and $D$ the entire corpus of documents. Tf-idf may be determined by combining tf with idf to give a weight to each token representing its relative importance to a corpus of documents, and may be represented by the following equation:

$$tf\_idf(t) = tf(t, d) \times idf(t)$$

In an exemplary implementation, a feature size of 1,000 was used. In some studies, increasing the feature size improved only slightly the URLs representations quality. Table 3 below depicts the TopN accuracy achieved by this unsupervised representation. On average, 37% of the matches were caught in the top 3 similar users.

Supervised learning may be utilized in the process for representation learning from URLs for extracting embeddings from the URLs. The supervised approach consisted of taking advantage of the ground truth matching pairs to learn more meaningful representations for the traveler matching task. In an exemplary embodiment, a Siamese Network may be used to learn the supervised embedding.

In an exemplary implementation, a Siamese network may be used that consists of two multilayer perceptrons (MLP) with one hidden layer. The tf-idf vectors may be fed as the inputs to the MLP and compute the Euclidean distance between the outputs of the network. The training labels consisted of 0 if the input pair was a match and 1 otherwise.

The loss function used in this work may be a contrastive loss. An objective of the processes described herein was to learn meaningful embeddings which may subsequently allow to identify similar users. The contrastive loss may be adapted to this task as it minimized intra-class embeddings distance (e.g., matched users) and maximized inter-class distance (e.g., nonmatched users). The margin $m$ prevented from sending similar examples farther than necessary which can push inevitably some similar points. The contrastive loss may be defined as the following equation:

$$Loss = \begin{cases} \frac{1}{2}\|f_i - f_j\|_2^2 & \text{if } \quad y_{ij} = 0 \\ \frac{1}{2}\max(0, m - \|f_i - f_j\|_2^2) & \text{if } \quad y_{ij} = 1 \end{cases}$$

where $fi$ and $fj$ are the URLs embedded representations for user $i$ and $j$ respectively. The $y_{ij}$ represented the training label as 1 if the pair of users did not match and 0 otherwise.

In an exemplary implementation, one hidden layer may be used in the architecture to learn meaningful URL representations without failing into overfitting. ReLU may be used as an activation function which provided embeddings with a cosine similarity range between 0 and 1. In an exemplary implementation, margin used with the contrastive loss function may be set to 3. In some implementations, an optimizer may be used (e.g., with a learning rate of 0.001). In an exemplary implementation, during training, the Siamese Network may be given challenging pairs so that the efficiency in identifying same users and distinguishing different users increased.

Other than URLs, supervised learning may also be utilized in the process for representation learning from additional features to create further travel representations. For example, origin and destination (OnD), flight dates, device information, and geographic information (e.g., city) were used in the techniques described herein.

Origin and destination information comes for each event in the form of IATA code. For example, during a browsing period, each traveler may look for several destinations. For example, for a particular event, "VIE" as origin and "CGN" as destination refer to a flight from Vienna in Austria to Cologne in Germany. For each cookieID, a document may be constructed of all searched origins and destinations and use Tf-idf for the vectorization. Mixing the origin and destination in the same document allowed to capture the travelers searching for roundtrip flights.

Flight dates concerns the departure and return date of the searched flight (in the case of round trip). For example, an assumption can be made that a traveler looking for a flight for a given date on his or her phone may look for the same dates on his computer. Therefore, all the dates searched are utilized, whether the flight was outbound or return in the same document for each cookieID and vectorize it with tf-idf.

Device information provides information about the device of the user, notably the operating system, browser and versions of software. An example of a device information is: "Mozilla/5.0 (Linux; Android 10; LIFETAB E1080X) AppleWebKit/537.36 (KHTML, like Gecko) Chrome/89.0.4389.105 Safari/537.36". The users agents may be tokenized using the following separators ";" or "(" or ")" or " " or 7" and construct the "document" of all device information that are vectorized with tf-idf. The device information may be helpful in identifying users who clean his or her cookies as those users that still use the same device and thus have more or less similar device information.

Geographic information may be used to indicate the city and/or country of the user's location when searching a website. For example, a document may be built based on the cities where the user was located during all his or her online browsing history. Geographic information may be informative as users using multiple devices are more likely to stay in the same town or city.

URLs are informative to extract user preferences, however, sometimes the URLs may not reflect all the required information to identify the traveler. In this case, the destination and departure airports and travel dates may be used, as they can reflect important features either not provided in the URLs or not highlighted by the URLs representation learning. For example, on a large scale, different users may be looking for identical flights during the same period with same dates and OnDs. In this case, other features about the traveler may be used such as the device information or the geographic information which are intrinsically linked to the user. Based on this intuition, an information fusion technique may be used, and an addition to the user×user similarity matrix of the URLs can be utilized. For example, four user×user similarity matrices of the other features may be used. Since the elements of tf-idf vectors are positive, the range of similarities is between 0 and 1 for the unsupervised representations. For the supervised URLs representation, an ReLU may be privileged to have embeddings with positive values. This may allow to have similarities range between 0 and 1. In some implementations, the similarities matrices may be merged by computing their average, where two users that have a high similarity in all user×user matrices may be more likely to form a match.

In some implementations, the tf-idf protocol was utilized to construct n tokens for each level in the URL hierarchy, i.e., a/b/c becomes [a, ab, abc]. In some implementations, only the first 3 levels were used. Alternatively, in some implementations, all the levels of the hierarchy may be used because more interesting tokens may be present in the higher levels. In some implementations, a doc2vec model may be built for four hierarchical levels of URLs. However, the nature of the URLs for travel searches has several levels, thus the levels may be redefined by concatenating the tokens of the URLs (e.g., First level: Tokens 1 to 3, Second level: Tokens 1 to 6, Third level: Tokens 1 to 9, Fourth level: All tokens in URLs). In some embodiments, each of the previous levels were considered as "words in a sentence", and there are four different doc2vec models to add a merge model obtained with the information fusion of these four models.

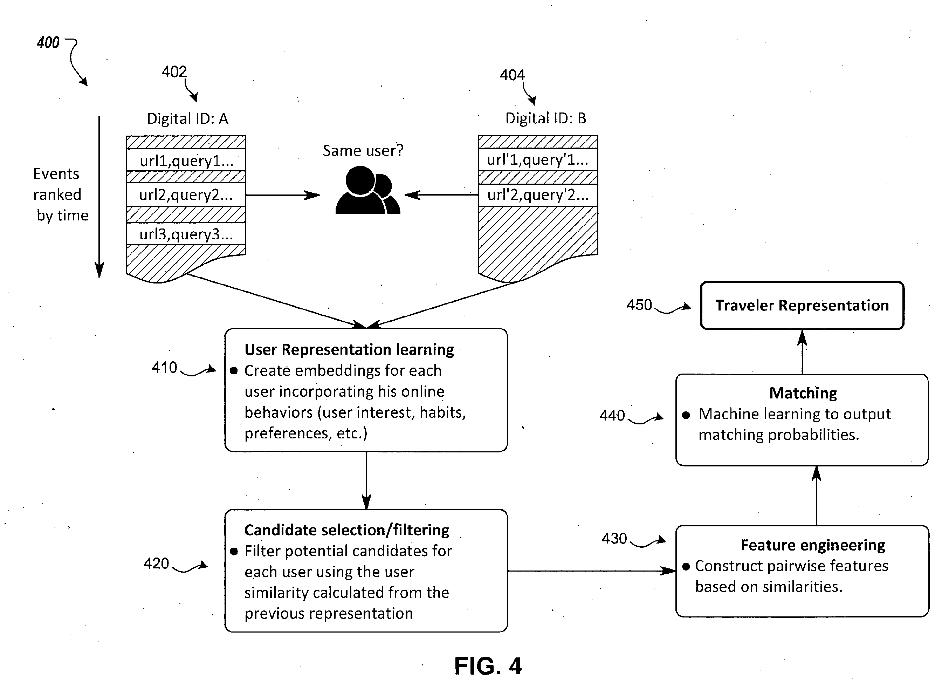

**Figure 4** illustrates an example environment 400 for determining a traveler representation learning solution to identify travelers using behavior data, according to embodiments of the invention. Operations of the process illustrated in environment 400 can be implemented, for example, by a system that includes one or more data processing apparatus, such as the data matching server 150 of Figure 1. The process can also be implemented by instructions stored on computer storage medium (e.g., the matching instruction set 160), where execution of the instructions by a system that includes a data processing apparatus cause the data processing apparatus to perform the operations of the process of environment 400.

Figure 4 illustrates a traveler representation learning solution. A traveler's information may not include PII data and matching on traveler data may be difficult because traveler data can be sparse and dispersed, which can prevent from utilizing sequential models. The traveler representation learning solution of example environment 400 uses an unsupervised URL representation more adapted to traveler's URLs. The representation is improved with Siamese Network to make it specialized to the traveler matching task. Other features are then used to enrich matching capabilities based on an information fusion technique. Finally, a candidate selection is used to reduce the number of possible comparisons before building pairwise features to boost the performance of traveler matching using a binary classifier.

In some embodiments of the invention, example environment 400 illustrates determining a traveler representation learning solution to identify travelers using behavior data without PII information. For example, a comparison is made between two similar users to determine if it is the same user. A digital identification for two strings of information of users is compared (e.g., digital ID-A 402 and digital ID-B 404). Each digital ID includes a string of URLs and associated search queries that are time stamped and sorted based on the associated timestamp for each search query. At user representation learning block 410, based on user representation learning, a merged user representation is determined (e.g., merged traveler representation at block 350 of Figure 3).

Then at candidate selection block 420, potential candidates are filtered for each user using the user similarity calculated from the previous representation. For example, filters may be defined to reduce candidate numbers (as there can be millions of users), and the merged similarities are used to select the top most similar candidates (e.g., reduce number of direct comparisons required).

In some implementations, candidate pairs may be generated to create all possible pair combinations between cookieIDs and then determine whether they constitute a match or not for a candidate selection technique. In candidate selection, some filters may be used to reduce as much as possible the size of the candidate pairs to be generated while preserving those candidate pairs that have the most chance to result in a match. For example, for each user, a search may be conducted for the k most likely candidates to form a matched pair. Taking advantage of the user×user matrix generated in the information fusion technique described herein (e.g., the aggregation of representations from URLs, OnD, flight dates, geographic information, and device information) to generate the top k candidates for each cookieID during training and test. A same number of candidates $k$ may be used during both stages to have the same imbalance ratio. For example, taking a larger k parameter may increase the size of the generated pairs and at the same time the imbalance ratio.

Then at feature engineering block 430, pairwise features are constructed based on similarities. For example, for the travel search, three sets of features (and associated subfeatures) are used for the pairwise construction: travel preference (e.g., OnDs, number of travelers, products, website, etc.), traveler behavior (e.g., search level, browser, device, time, etc.), and similarity (e.g., similarity values, ranks, etc.).

In some implementations, the feature generation technique divided the travel industry embodiment into three types of feature categories: traveler preference, traveler behavior, and traveler similarities. Of those feature categories, each may be broken down into subcategory features. For traveler preference, in an exemplary embodiment, an assumption may be made that two cookieIDs that share more or less the same preferences, are more likely to belong to the same user. The subcategory features for traveler preference includes: SameProductId, SameProductName, and SamePassengers. SameProductId may be based on extracting the most frequent product searched by the user (usually each search contains only one product type) and a binary feature may be built that tells if the two users have the same productID or not. SameProductName may be built similar to SameProductId but considers products names. Finally, SamePassengers may be based on users' needs when searching for a flight to indicate the number of passengers traveling. For each uuid, the number of passengers queried the most may be kept. A binary feature may be built to tell if two cookieIDs have the same number of passengers or not.

For traveler behavior, in an exemplary embodiment, pairwise features may be built based on travel behavior. The subcategory features for traveler preference may include: SameLanguage, SameCountry, SameCity, SameOS, SameBrowser, SameDevice, SearchLevel, TimeToFlight, TimeRange, and Overlap. These features can change based on different providers and capture mechanisms. For example, SameLanguage may be based on a binary feature that tells if two cookieIDs visited a website with the same language. SameCountry may be based on a binary feature that tells if two cookieIDs may be from the same country or not. SameCity may be based on a binary feature that tells if two cookieIDs may be from the same city or not, considering the city where the user had done the most searches. SameOS may be based on a binary feature that tells if a pair of cookieIDs have the same OS (e.g., Windows, Android, Macosx, etc.). SameBrowser may be based on a binary feature that tells if a pair of CookieIDs have the same browser (e.g., Chrome, Safari, Mozilla, etc.). SameDevice may be based on extracting from the device information (e.g., device name) and constructing a binary feature that tells if a pair of cookieIDs have the same device name. SameDevice may be used to identify the users that potentially clean their cookies. SearchLevel may be based on a hierarchical level of the URLs of each event, such that to construct the pairwise feature, all the search levels for the cookieIDs in each pair are averaged and using the absolute difference. TimeToFlight may be based on an assumption that users may have patterns regarding the date of their search with respect to the actual date flight. Thus, for the events of each cookieID, the differences between flights dates and search dates may be calculated and averaged. The absolute difference may then be calculated for each pair of cookieID. TimeRange may be based on a feature that gives the number of days that a pair of cookieIDs covers through its events. For example, given the interval of activity of the user $u$ and the interval of the user v, the number of days of their union may be calculated. Finally, Overlap may be based on a binary feature that tells if a pair of cookieIDs has an overlapping time activity. For example, the Overlap feature may be an indicator in the case of cookie cleaning for example where overlaps cannot happen.

For traveler similarities, in an exemplary embodiment, the following set of subcategories of features may be based on the jaccard index between OnDs, number of passengers, and cities. In some implementations, a cosine similarity can be added to some of the different user representations for the information fusion technique. The subcategory features for traveler similarities includes: JaccardOnD, JaccardPassengers, JaccardCity, JaccardAdults, CosineURLs, CosineOnDs, CosineDates, CosineCities, CosineAgents, and Ranking. JaccardOnD may be based on a user looking at different OnDs during an online session. It may be assumed that a user will tend to search for the same destinations across different devices. Thus, the set of these OnDs are built for each cookieID. For a pair of cookieID (u,v) the feature may be the Jaccard index between these two collections of cookieIDs can be determined by the following equation:

$$Jaccard(u,v) = \frac{|Ond_u \cap Ond_v|}{|Ond_u \cup Ond_v|}$$

where $OnD_u$ and $OnD$, were the sets of OnDs searched by users u and v respectively. JaccardPassengers may be similar to JaccardOnD, except the jaccard index may be computed between the sets of number of passengers queried. JaccardCity may be based on users that have more than one city from where they search (e.g., people working in a city neighboring the one they live in). Thus, the jaccard index may be calculated between the sets of cities of cookieID pairs. JaccardAdults may be based on taking the set of numbers of adults that looked for and calculate the jaccard index between as pairwise feature for each CookieID. CosineURLs may be based on cosine similarity between the URLs unsupervised representations of cookieIDs pairs. CosineOnDs may be based on cosine similarity between the origin and destination representations of cookieIDs pairs. CosineDates may be based on cosine similarity between the flight dates representations of cookieIDs pairs. CosineCities may be based on cosine similarity between the cities representations of cookieIDs pairs. CosineAgents may be based on cosine similarity between the users' agents representations of cookieIDs pairs. Finally, Ranking may be based on a mutual ranking order between a pair of cookieIDs (e.g., user1, user2). For example, as top $k$ candidates for each cookieID are selected, the different ranks maybe stored, and thus there may be two features, one for the ranking of user2 in the list of top $k$ candidates of user1 and reciprocally as well.

Then at matching block 440, a selected machine learning model is used to output refined matching probabilities and determine a learned traveler representation 450. For example, a binary classifier is built to tell if a given pair of travelers are the same person or not, taking class imbalance into consideration. In an exemplary implementation, pairwise classification may be utilized for traveler matching. For example, given a pair of cookieIDs, an objective is to determine whether they belong to the same user or not. The first step may be to generate cookieIDs pair candidates (e.g., candidate selection). Then, an important step may be to design features for the candidate pair. Finally, a determination may be made as to whether a candidate pair may be a match or not with pairwise classification.

In some embodiments of the invention,.after building the features for each pair, a machine learning selection framework was implemented to identify the best machine learning algorithm for selection. In some embodiments, automatic machine learning (AutoML) may be used to select the best machine learning model that minimizes a specific metric, which in an exemplary embodiment was set to the area under the precision recall curve (AUCPR). AutoML may be a process used of applying machine learning models to real-world problems using automation, and automates the selection, composition, and parameterization of machine learning models. In an exemplary embodiment of the invention, the selected model may be a gradient boosted machine (GBM). GBM models rely on the idea that good predictive results can be obtained by more and more refined approximations. GBM sequentially builds regression trees on all the features of the dataset in a fully distributed way.

In embodiments of the invention, techniques described herein for traveler matching are intended primarily to contribute to the state of the art of cross device-matching. Additionally, techniques described herein may be used in other scenarios and generalized to other datasets. For example, the performance of the model used herein may be conditioned to the presence of the physical and behavior features mentioned above.

In embodiments of the invention, techniques described herein for traveler matching may utilize reduced amount of features using the protocol as described. Reducing the number of features affects the matching performance of the invention, but allows it to be used with data coming from other sources or capture mechanisms which may not contain the full set of features described in the exemplary embodiment. For example, the reduced feature technique used the following features/attributes: OnDs, flight dates, website domains, number of passengers, and language. The OnDs, flight dates, and website domains may be used for the traveler representation learning.

**Figure 5** illustrates a flowchart of an example process 500 for determining user representations based on matching, according to embodiments of the invention. Operations of the process 500 can be implemented, for example, by a system that includes one or more data processing apparatus, such as the one or more data matching server(s) 150 of Figure 1. The process 500 can also be implemented by instructions stored on computer storage medium (e.g., matching instruction set 160), where execution of the instructions by a system that includes a data processing apparatus causes the data processing apparatus to perform the operations of the process 500.

The system receives a user matching request from a requestor associated with one or more users of a plurality of users (510). In some implementations, the matching request is associated with a travel search event (e.g., a traveler searching for an airline ticket from an origin to a destination). In some implementations, the event includes one or more segments (events belonging to the same travel event/trip) during an event time period associated with the user. For example, as illustrated in Figure 1, a client device 110 initiates a matching request (e.g., matching request 210) by a requestor via application 112 based on an event (e.g., searching for a trip) associated with a user (e.g., traveler) from a user device. A requestor of a matching request (e.g., matching request 210) may include an airline agency, travel agency, metasearch engine, other dedicated global distribution systems (GDS), as for example airlines reservation systems which provide flight search applications for shopping business like flight booking, and the like, that are looking to increase advertising revenue by providing further recommendations for travel booking associated with the travel event (e.g., taxi, hotel, activity, etc.)

The system, in response to the matching request, event search data for a plurality of events for the plurality of users, the event search data including one or more sets of search event attributes for the plurality of users (520). For example, the matching instruction set 160, stored on one or more data matching server(s) 150, receives a matching request 210 (e.g., from a client device 110 via gateway 122) and determines matching results 230. In some implementations, the event attributes include behavioral data (e.g., URL, timestamp, origin airport, destination airport; flight dates, number of passengers, product type, product name, URL search level, etc.). For example, the event attributes may include a user interacting with an application, origin and destination data associated with the event/trip, a user identification (e.g., email, ID number, etc.) a departure date, a trip duration, and the like. For example, as illustrated in the example environment 100 of Figure 1, a matching instruction set 160 can receive a matching request and access data from the historical database 142, or access real-time market data from the revenues management database 132, bookings database 134, and/or the inventory database 136. Market data may include multiple sets of origin and destination information, past trips, past user interactions with recommendations, location information associated with the user or segments of the event, and the like. The market data may include user specific information (e.g., past trips, past recommendation offers, etc., specific for one traveler), or information related to the origin and destination for a plurality of travelers.

In some implementations, the plurality of events are associated with a travel event, and the event search data includes travel information based on each travel event. In some implementations, the event search data includes origin and destination information, a user identification (ID), a departure date, a trip duration, or a combination thereof.

In some implementations, the search event attributes associated with the user and the plurality of users includes non-personal identifying information. Examples of personal identifying information (PII data) may include passport information, email address, a first and last name, a phone number, and the like.

In some implementations, the search event attributes include behavioral data associated with the plurality of users. In some implementations, the behavioral data includes at least one of interactions with one or more websites (clicks) associated with the event, a session duration, and content displayed during the interaction with the one or more websites (ads displayed).

The system generates a merged user representation for a plurality of candidates associated with the plurality of users based on the event search data (530). For example, the system creates embeddings for each user incorporating online behaviors (e.g., user interest, habits, preferences, etc.). For example, illustrated in Figure 3, merged traveler representation at block 350 using one or more techniques described herein.

In some implementations, generating the merged user representation for the plurality of candidates associated with the plurality of users includes determining similarity matrices for each candidate by creating embeddings for each user based on the event search data. For example, at user representation learning block 410 of Figure 4, based on user representation learning, a merged user representation is determined.

In some implementations, generating the merged user representation for the plurality of candidates associated with the plurality of users is based on natural language processing of the event search data. For example, an NLP technique may be used to learn a user representation of the search histories, OnD representations, and travel date representations.

In some implementations, the event search data includes a plurality of search history addresses (URLs), and generating the merged user representations for the plurality of candidates includes generating a token for each search history address (e.g., tokenize each url (tk1, tk2, ..., tkN) with specially designed separators for travel data, generating combinations of consecutive tokens (e.g., combine two consecutive tokens as one new token (tk12, tk23, ...)), randomize an order of the combinations of consecutive tokens, and determine the merged user representations for the plurality of candidates based on the randomized order of the combinations of the consecutive tokens utilizing natural language processing techniques.

The system selects a subset of candidates from the plurality of candidates based on the merged user representation (540). For example, at block 350 of Figure 3, a merged traveler representation can be generated based on one or more different models.

In some implementations, selecting the subset of candidates from the plurality of candidates based on the merged user representation includes filtering the plurality of candidates for potential candidates for each of the plurality of candidates using the similarity score calculated from the associated merged user representation.

The system determines pairwise features based on similarities between the subset of the candidates (550). For example, at feature engineering block 430, pairwise features are constructed based on similarities. For example, for the travel search, three sets of features (and associated subfeatures) are used for the pairwise construction: travel preference (e.g., OnDs, number of travelers, products, website, etc.), traveler behavior (e.g., search level, browser, device, time, etc.), and similarity (e.g., similarity values, ranks, etc.).

In some implementations, the pairwise features based on similarities between the subset of the candidates includes determining multiple sets of features. In some implementations, the multiple sets of features include user preference information (e.g., OnDs, a number of travelers, products, website, etc.), user behavior information (e.g., search level, browser, device, time, etc.), similarity information (e.g., similarity values, ranks), or a combination thereof.

The system identifies at least one user of the plurality of users from the subset of the candidates based on the pairwise features and utilizing a machine learning algorithm (560). In some implementations, the machine learning algorithm determines matching probabilities associated with the at least one identified user of the plurality of users. For example, at matching block 440, a selected machine learning model is used to output refined matching probabilities. For example, a binary classifier is built to tell if a given pair of travelers are the same person or not, taking class imbalance into consideration.

In some implementations, the machine learning algorithm is a binary classifier configured to identify and remove duplicate associations between a first candidate and a second candidate associated with the same user based on the pairwise features. For example, a binary classifier may be built to determine if a given pair of travelers are the same person or not, taking class imbalance into consideration. In some implementations, unsupervised learning may be used to extract embeddings from URLs. Additionally, or alternatively, a supervised learning approach may be utilized using ground truth matching pairs to learn more meaningful representations for the traveler matching task (e.g., a Siamese network using two multilayer perceptrons (MLP) with one hidden layer). In some implementations, the machine learning algorithm may use gradient boosting, random forest, etc., and may be trained on data for a large set of interactions (e.g., URLs, OnDs, days before departure, recommendations shown and clicks, and the like). In some embodiments of the invention, an eXtreme Gradient Boosting (XGBoost) machine learning algorithm may be used.

The system provides a learned user representation associated with the at least one identified user of the plurality of users to the requestor (570). For example, after the matching results 230 are compiled at the matching instruction set 160 at the one or more data matching server(s) 150, the learned traveler representation(s) may be generated and/or updated, and provided to the requesting entity, advertiser, recommender, metasearch engine, etc., in order to determine which recommendations (e.g., advertisements) to provide to an end user (e.g., a traveler) at a user device via an API. For the example, the learned traveler representations include enhanced (e.g., past and present) event information that can be used by the application owners (e.g., merchants) to better personalize the user experience and improve the recommendations by improving inspiration and search experience (e.g., session restore), traveler clustering, segmentation and profiling, improving recommender system, and advertising use cases.

In some implementations of the invention, providing the learned user representation includes providing expected click through rate (CTR) data associated with the user based on the learned user representation. For example, a system that hosts the data matching server 150 may provide matching results (e.g., one or more learned user representations) to a requesting entity (e.g., a merchant).

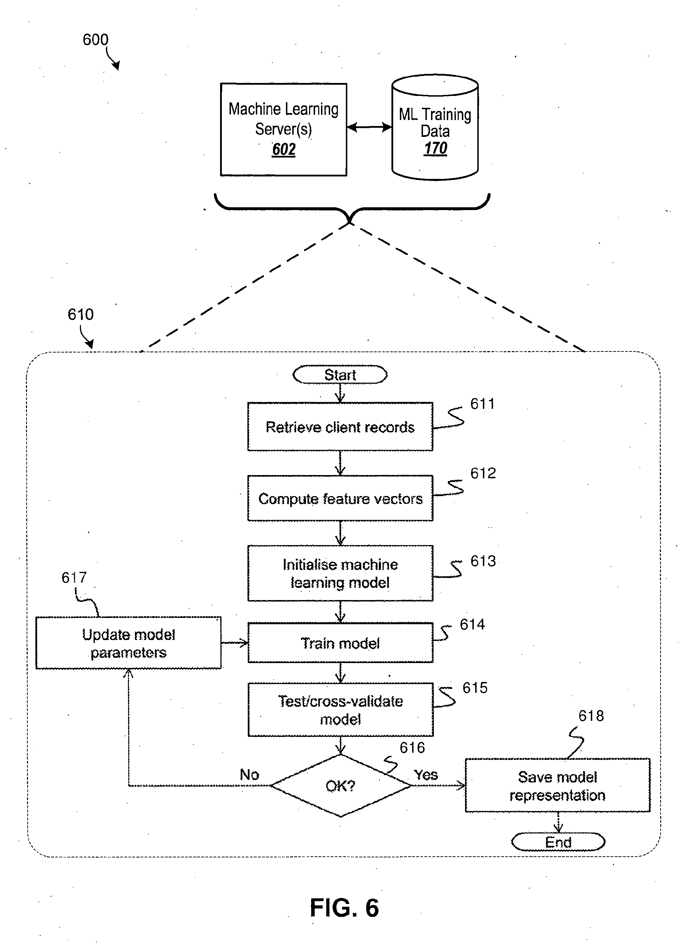

**Figure 6** is a flowchart 600 illustrating a method of offline training embodying the invention, such as may be implemented by a computing system. The computing system may include one or more high-performance computing systems, preferably including hardware and/or software that is optimized for efficient execution of one or more machine learning models. For example, the computing system may include one or more machine learning server(s) 602 that can access the machine learning training database 170. The computing system may include one or more GPUs, in view of the fact that certain machine learning models, such as neural network and deep learning models, are efficiently implemented using highly parallel, vectorized, algorithms for which GPUs are particularly well-suited.

According to this method, at block 611 travel booking records and associated categories (which may alternatively be called 'tags', 'labels', 'classes', or 'classifications', depending upon context) are retrieved from a database (e.g., machine learning training database 170). At block 612, a set of feature vectors is computed using the contents of the travel booking records. This action in the method has the effect of linking the detailed offline data corresponding with individually-distinguishable travelers available in the machine learning training database 170 with the more limited unidentified user information that is available in the online context, i.e., as transmitted to a DSP platform.

More particularly, a feature is an item of information (e.g., a numerical, categorical, or Boolean value) that can be derived from both the detailed offline data and the more-limited online data. For example, online data relevant to travel booking services and captured from an unidentified user's online activities (e.g., no PII data) relating to an actual or potential trip (e.g., based on search queries, booking site searches or enquiries, and/or actual online bookings) may include origin of travel, destination of travel, date of departure, date of arrival, and duration of trip. However, additional details that may be available in the offline database, such as traveler name, class of travel, cost of travel, traveler history, and so forth, are not generally available in the online context. A feature vector is a set of the features derivable from both offline and online data that are collectively used for training of the machine learning model, and for subsequent online classification by a DSP server. Feature vectors may include values of the distinct plurality of features associated with each corresponding predetermined traveler category

At block 613, an untrained machine learning model is initialized. This action involves creation and initialization of data structures including the model, as well as the setting of relevant parameters/hyperparameters for the training process. It may also involve model selection, and in some embodiments the model may in fact combine multiple models (ensemble learning). At block 614, a computing system executes one or more training procedures in accordance with the selected one or more machine learning algorithms. Training involves inputting at least a portion of the computed feature vectors and corresponding tags as a training set, and applying a training procedure adapted to minimize an objective function which reflects an accuracy of the trained model in classifying the feature vectors according to the known tags. Subsequently, at block 615, the trained. model may be tested using a test set, and/or cross-validation set, which may, for example, includes a portion of the computed feature vectors and corresponding tags held back from the training block 614 for this purpose.

At decision block 616, the results of the test block 616 may be evaluated to determine whether they satisfy a suitable criterion of quality. If not, then at block 617 the model parameters/hyperparameters may be updated and the model reinitialized for retraining at block 614. Alternatively, if the model is deemed to be of sufficient quality, a representation of the trained model is saved at block 618. This representation is suitable to be loaded and executed by a DSP server.

*Example*

For the purposes of classifying the mapping users based on cookieIDs, an example dataset used in the embodiments of the invention described herein came from online travel agencies. The example dataset contained browsing logs on different online websites for approximately nine months. Emails were selected with at least two cookieIDs which resulted in 373,327 emails representing 2,126,030 cookieIDs. This protocol was selected to follow the one from a public competition for a fair comparison. The traveler data included universally unique identifiers (UUIDs) and their associated events, and the mapping data linked emails and cookieIDs. Additionally, valid matched emails had at least two cookieIDs, and valid matched UUIDs had corresponding cookieIDs. The majority of the filtered cookieIDs had an event length sequence of one, which means that some of the cookies were not tracked. In this embodiment, a Boolean feature "set cookie" was used as a filter to select if a cookie was set in the user browser, this filter resulted in 102,143 UUIDs remaining. The UUIDSs with only one URL were removed, as these are considered not useful in this example. The remaining emails that have only one UUID due to the previous filtering are also pruned. The final dataset had 41,732 emails along with 87,574 UUIDs. In an exemplary implementation, 70% emails were randomly selected to form a training set and 30% were selected to form a test set with different seeds. More details on the dataset can be found in Table 2.

**Table 2** provides statistics about the exemplary final filtered dataset:

**Table 2: Dataset Statistics**

| Data | Number |
|---|---|
| Number of cookieIDs | 87,574 |
| #emails | 41,732 |
| #matching pairs | 56,905 |
| #events | 4,600,62 |
| #domains | 58 |
| #URLs | 1,131,67 |
| #avg unique URLs per cookieID | 15.93 |
| #device information | 23,872 |
| #departure airports | 1,730 |
| #destination airports | 2,115 |
| #products types | 4 |
| #browser types | 9 |
| #countries | 197 |
| #cities | 14,880 |

A TopN accuracy was used to measure the performances of the traveler representation learning. Additionally, the F1-measure, on the other hand, was an indicator evaluating the overall quality of the inference model. For user representation learning for the TopN accuracy, a framework was built to learn semantic vectors $u_i$ of dimension d that represents user's patterns and preferences. Giving each user representation, a user×user similarity matrix was built.

For example, the similarity matrix was: S = [$su$, $v]^{n \times n}$ of $n$ users where su,vwas the similarity value between vector representation of user $u$ and user $v$. In some implementations, a cosine similarity equation was used for high-dimensional positive spaces. Based on the user×user similarity matrix, the quality of the vectors was evaluated by calculating, on average, the percentage of correct matches cached in the TopN similar users (referred to herein as metric TopN accuracy). For example, if the top 5 similar users of the user $u$ from the similarity matrix were users [a,e,p,l,h] and the ground truth were [e,z], the TopN accuracy is 0.5 (e.g., only half of the ground truth in the top 5 similar users). Average accuracies were calculated for n users and used to report as an evaluation metric for the quality of the representations. Precision and recall were directly determined from a confusion matrix.

In an exemplary implementation, one hidden layer was used in the architecture to learn meaningful URL representations without failing into overfitting. ReLU was used as an activation function which provided embeddings with a cosine similarity range between 0 and 1. In an exemplary implementation, margin used with the contrastive loss function was set to 3. In some implementations, an optimizer was used (e.g., with a learning rate of 0.001). In an exemplary implementation, during training, the Siamese Network was given challenging pairs so that the efficiency in identifying same users and distinguishing different users increased. To form the training pairs, the top 40 closest candidates for each user were selected by the cosine similarity based on their unsupervised representations. If the selected user was a real match, the pair was labeled with 1, otherwise with 0. In an exemplary embodiment, the selected number was 40 provided the best TopN accuracy scores. Choosing candidates from the pool of 40 candidates allowed to^select challenging candidates whose representation were similar but that do not constitute a match, but also candidates that are far in term of similarities and still happen to form a match.

In an exemplary implementation, 70% of the emails were randomly split in the dataset for training and the remaining 30% for testing. The results and a comparison with unsupervised learning is presented below in table 3. The TopN accuracies indicated that the Siamese Network significantly increased the quality of the URLs representations.

**Table 3** illustrates the accuracy (e.g., mean and standard deviation) of the URLs representations of the test set for both supervised and unsupervised representation.

**Table 3: TopN Accuracy of URL Representations on Test Set**

| Accuracy/Model | Unsupervised | Supervised |
|---|---|---|
| Top3 | 37.37%±0.16 | 50.47%±0.29 |
| Top5 | 41.51%±0.25 | 54.66%±0.21 |
| Top10 | 47.22%+0.22 | 60.05%±0.17 |
| Top18 | 52.27%±0.22 | 64.32%±0.15 |
| Top50 | 61.50%±0.23 | 71.29%±0.17 |

**Table 4** provides the results of the four additional representations in addition to the URLs. Disparities in the ability to identify matches on the four features was evident. In particular with the features OnD and geographic information (city), which seem to be more informative than flight dates and device information.

**Table 4: TopN Accuracy of Other Features Representations on Test Set**

| Accuracy/Model | OnD | Flight dates | Device information | Geographic info (city) |
|---|---|---|---|---|
| Top3 | 32.01%±0.12 | 10.20%±0.13 | 3.78%±0.09 | 21.88%±0.14 |
| Top5 | 38.32%±0.25 | 12.48%±0.14 | 4.85%±0.11 | 26.31%±0.14 |
| Top10 | 47.26%±0.23 | 15.87%±0.16 | 6.41%±0.15 | 32.53%±0.25 |
| Top18 | 54.55%±0.29 | 19.18%±0.09 | 8.04%±0.21 | 37.57%±0.28 |
| Top50 | 66.53%±0.29 | 25.88%±0.15 | 11.66%±0.29 | 45.47%±0.37 |

The results of an information fusion technique as described herein for this example are shown in **Table 5** which provide a clear improvement of the TopN accuracy as different features were added. Adding the unsupervised URLs representation in the end allows to improve the scores, which suggests that a small part of the information lost during the training of the Siamese network was made up with the fusion information provided by the information fusion technique.

**Table 5: TopN Accuracy for the Merged Representations**

| Model/TopN accuracy | Top3 | Top5 | Top10 | Top18 | Top50 |
|---|---|---|---|---|---|
| State-of-the-art (Sota) Doc2vec | 8.96%±0.15 | 10.79%±0.12 | 13.79%±0.13 | 16.77%±0.12 | 23.33%±0.19 |
| Sota TFIDF | 22.38%±0.14 | 24.52%±0.18 | 27.82%±0.21 | 30.96%±0.18 | 37.75%±0.18 |
| Supervised | 50.47%±0.29 | 54.66%±0.21 | 60.05%±0.17 | 64.32%±0.15 | 71.29%±0.17 |
| Supervised+OnD | 57.20%±0.14 | 62.10%±0.26 | 68.25%±0.17 | 72.90%±0.19 | 79.97%±0.31 |
| Supervised+OnD+dates | 60.75%±0.17 | 64.86%±0.12 | 69.91%±0.09 | 13.76%±0.10 | 79.51%±0.21 |
| Supervised+OnD+dates+city | 67.03%±0.24 | 70.65%±0.27 | 74.99%±0.27 | 78.36%±0.18 | 83.46%±0.32 |
| Supervised+OnD+dates+city+ deviceinfo | 67.48%±0.25 | 71.13%±0.24 | 75.51%±0.28 | 78.80%+0.22 | 84.02%±0.14 |
| Super+OnD+dates+city+ deviceinfo+unsupervised | 69.99%±0.28 | 73.71%±0.26 | 78.14%±0.23 | 81.45%±0.25 | 86.49%±0.16 |

In some implementations, the training was done for five epochs for a window size of 15 and an embedding size of 300. The results are shown in **Table 6.**

**Table 6: TopN Accuracy of SOTA Representation Learning**

| Sota/TopNaccuracy | Top3 | Top5 | Top10 | Top18 | Top50 |
|---|---|---|---|---|---|
| TFIDF | 22.38%±0.14 | 24.52%±0.18 | 27.82%±0.21 | 30.96%±0.18 | 37.75%±0.18 |
| Doc2vec level1 | 0.92%±0.05 | 1.31%±0.05 | 2.08%±0.07 | 3.10%±0.09 | 6.16%±0.09 |
| Doc2vec level2 | 5.71%±0.05 | 7.21%±0.09 | 9.63%±0.07 | 12.12%±0.11 | 17.90%±0.20 |
| Doc2vec level3 | 9.10%±0.15 | 10.90%±0.16 | 13.71%±0.13 | 16.55%±0.18 | 22.43%±0.15 |
| Doc2vec level4 | 8.72%±0.15 | 10.54%±0.22 | 13.28%v0.21 | 16.06%+0.18 | 21.53%±0.25 |
| Doc2vec merged | 8.96%±0.15 | 10.79%±0.12 | 13.79%±0.13 | 16.77%±0.12 | 23.33%±0.19 |

In candidate selection, some filters were used to reduce as much as possible the size of the candidate pairs to be generated while preserving those candidate pairs that have the most chance to result in a match. For example, for each user, a search was conducted for the k most likely candidates to form a matched pair. Taking advantage of the user×user matrix generated in the information fusion technique described herein (e.g., the aggregation of representations from URLs, OnD, flight dates, geographic information, and device information) to generate the top k candidates for each cookieID during training and test. A same number of candidates k were used during both stages to have the same imbalance ratio. For example, taking a larger k parameter increases the size of the generated pairs and at the same time the imbalance ratio. To avoid taking a too large of a parameter, the effect on the pairwise classification f1 scores was analyzed. The results reported on **Table 7** below are predictions that were made on validation sets obtained by random splits of the original training set (e.g., 10% of the training set is set for validation).

**Table 7: Candidate Selection Tuning of the Parameter k**

| Random | k=3 | k=5 | k=10 | k=18 |
|---|---|---|---|---|
| Seed1 | 74.21% | 74.51% | 74.28% | 74.31% |
| Seed2 | 72.39% | 72.65% | 72:79% | 72.42% |
| Seed3 | 73.29% | 73.33% | 73.17% | 72.92% |
| Seed4 | 70.33% | 70.75% | 70.76% | 70.36% |
| Seed5 | 72.70% | 72.84% | 72.49% | 72.38% |
| Mean±std | 72.59%±1.28 | 72.81%±1.22 | 72.70%±1.14 | 72.68%±0.96 |

For example, as illustrated in **Table 7**, setting *k to* 5 gives the highest f1 score on average on the 5 seeds. To test the significance of this result, as illustrated in **Table 8** below, a paired student test was run on the five seeds between the f1 scores with k set to 5 and f1 scores with k set to 3,10, and 18. The results were significant under the risk of 5% when compared to *k*=3 and *k*=18, but not with *k*=10. In an exemplary implementation, k=5 was used since *k*=5 generated less pairs.

**Table 8: P-Values of Paired Student Tests of the Model**

| Model with | k=3 | k=10 | k=18 |
|---|---|---|---|
| k=5 | 2.40% | 24.61 % | 0.28% |

In an exemplary embodiment, the results of the selected machine learning model (e.g., matching block 440 of Figure 4) were evaluated on the test set using the protocols mentioned herein, and the reported results are provided below in **Table 9**. The scores for the different levels of fusion information used in the candidate selection with all the features in the classifier are provided. For example, the last line represents the best achieved f1 score.

**Table 9: Precision, Recall, F1 Score of the Inference Model on the Test Set**

| Model/Metrics | Precision | Recall | F1 |
|---|---|---|---|
| Supervised | 81.21%±1.88 | 44.82%±1.00 | 57.74%±0.82 |
| Supervised+OnD | 83.87%±0.92 | 50.15%±0.97 | 62.76%±0.80 |
| Supervised+OnD+dates | 83.52%±0.67 | 50.87%±1.02 | 63.22%±0.82 |
| Supervised+OnD+dates+city | 84.53%±1.09 | 54.07%±0.74 | 65.96%±0.74 |
| Supervised+OnD+dates+city+deviceinfo | 84.16%±0.37 | 54.21%±1.11 | 65.94%±0.86 |
| Supervised+OnD+dates+city+deviceinfo+ unsupervised | 82.59%±0.56 | 56.05%±0.92 | 66.78%±0.80 |

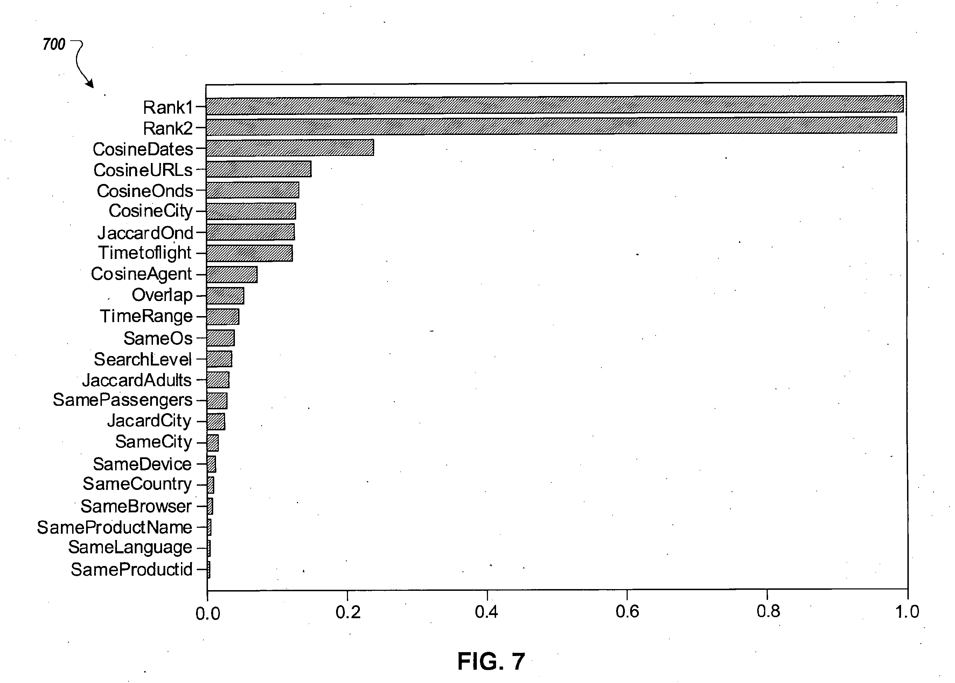

**Figure 7** provides a graph 700 which illustrates variables from the GBM. The graph 700 suggests that the two features related to the rankings (e.g., Rank1 and Rank2) were the most important. **Table 10** shows a comparison between the whole model and the one without the ranking features to illustrate their effect on the f1 score if removed, which provided a decrease of the f1 score of 10%. This decrease highlights the quality of the user representation learning which allowed to reliably rank from the users who have greatest chance to match to those who have the least.

**Table 10: Precision, Recall, F1 Score of the Inference Model Without Ranking Feature in Test Set**

| Features/Metri | Precision | Recall | F1 score |
|---|---|---|---|
| All | 82.59%±0.56 | 56.05%±0.92 | 66.78%±0.80 |
| All\{ranks} | 79.95%±1.18 | 44.18%±1.31 | 56.89%±0.96 |

The TopN accuracy of the different levels of information fusion for the reduced information case (e.g., for other similar datasets but with only the most basic features) are provided below in **Table 11**.

**Table 11: TopN Accuracy of the Reduced Model**

| Model/TopNaccuracy | Top3 | Top5 | Top10 | Top18 | Top50 |
|---|---|---|---|---|---|
| WebsiteDomain | 10.20%±0.12 | 12.48%±0.14 | 15.87%±0.16 | 19.18%±0.09 | 25.88%±0.15 |
| OnD | 32.01%±0.12 | 38.32%±0.25 | 47.26%±0.23 | 54.55%±0.29 | 66.53%±0.29 |
| Flight dates | 10.20%±0.13 | 12.48%±0.14 | 15.87%±0.16 | 19.18%±0.09 | 25.88%±0.15 |
| Flight dates+OnD | 50.21%±0.23 | 54.62%±0.23 | 60.22%±0.22 | 64.69%±0.29 | 71.80%±0.21 |
| Flight dates+On D+WebsiteDomain | 51.35%±0.15 | 55.73%±0.23 | 61.15%±0.34 | 65.40%±0.34 | 72.42%±0.38 |

Table 11 illustrates the importance of merging the similarities which increases the scores of the TopN accuracy compared to the situation where each representation is considered individually. Moreover, there was a 19% decrease of the TopN accuracy with regards to the complete model which includes in addition URLs, geographic information, and device information.

In the inference model, the pairwise features were generated from those considered above. Set1 the set of following pairwise features includes: {CosineDomain, CosineOnDs, CosineDates, SameLanguage, JaccardOnD, SameLanguage, JaccardOnD, JaccardAdults, TimetoFlight, and Ranking}. The model was further simplified by removing more features. Set2 may defined as set1\{SameLanguage, JaccardAdults, TimetoFlight}. **Table 12** shows the results of the pairwise classification on this model with the reduced features. For example, a decrease of the f1 score of 18% compared to the complete model using features in set1 and 20% using features in set2.

**Table 12: Precision, Recall, and F1 Score of the Reduced Model**

| I-eatures/Met rics | Precision | Recall | F1 score |
|---|---|---|---|
| Set 1 | 73.51%±0.5 5 | 36.73%±0.68 | 48.98%±0.56 |
| Set 2 | 70.02%±1.5 7 | 35.21%±0.46 | 46.85%±0.41 |

In the protocol established herein, a split may be made by email to constitute the training set and the test set. In other words, a set of users whose matches exist in the same set is fixed. However, a user's online activity was collected chronologically, which means that a new cookie that has just been tracked had a potential match in the history of cookies collected before, but also in cookies that will come in the future. The performance of the model was evaluated by time by doing a time split. The cookieIDs were sorted chronologically and divided by 70%/30%. Thus, 70% of cookieIDs remain in the training set (train-cookieIDs) and 30% were in the test set (test-cookieIDs). In an exemplary embodiment, the ground truth was distributed as follows: 57% (32,351) of cookieIDs in ground truth pairs are exclusively from train-cookieIDs; 16% (9,423) of cookieIDs in ground truth pairs were exclusively from test-cookieIDs, and 27% (15,501) shared between train-cookieIDs and test-cookieIDs.

The goal was to predict for the test-cookieIDs that matches present both in the test-cookieIDs and in the train-cookieIDs. To do this, in the representation learning part, the time was built for the user test×user all matrix. The ground truth data used to train the Siamese Network corresponded to the one in train (57% of total ground truth). **Table 13** describes the results of the travel representation part, where "all" includes all of the six features in the information fusion.

**Table 13: TopN Accuracy of the Time Split Model**

| Model/Accu racy | Top3 | Top5 | Top10 | Top18 | Top50 |
|---|---|---|---|---|---|
| All | 59.66% | 63.25% | 67.64% | 71.07% | 76.57% |

For example, as illustrated in Table 13, there was a 10% drop in the TopN accuracy on average due to this new splitting configuration, which was expected as a comparison within users in the entire set of cookieIDs was performed. The same protocol was used as before for the candidate selection, generating five candidates for each user and the corresponding pairwise features. AutoML was used to select the best model, which in this case again was a GBM. For example, as provided below in **Table 14**, the f1 scores drops to 49.37%.

**Table 14: Precision, Recall, and F1 Score of the Time Split Model**

| Features/Metric s | Precisio n | Recall | F1 score |
|---|---|---|---|
| All | 67.76% | 39.17% | 49.37% |

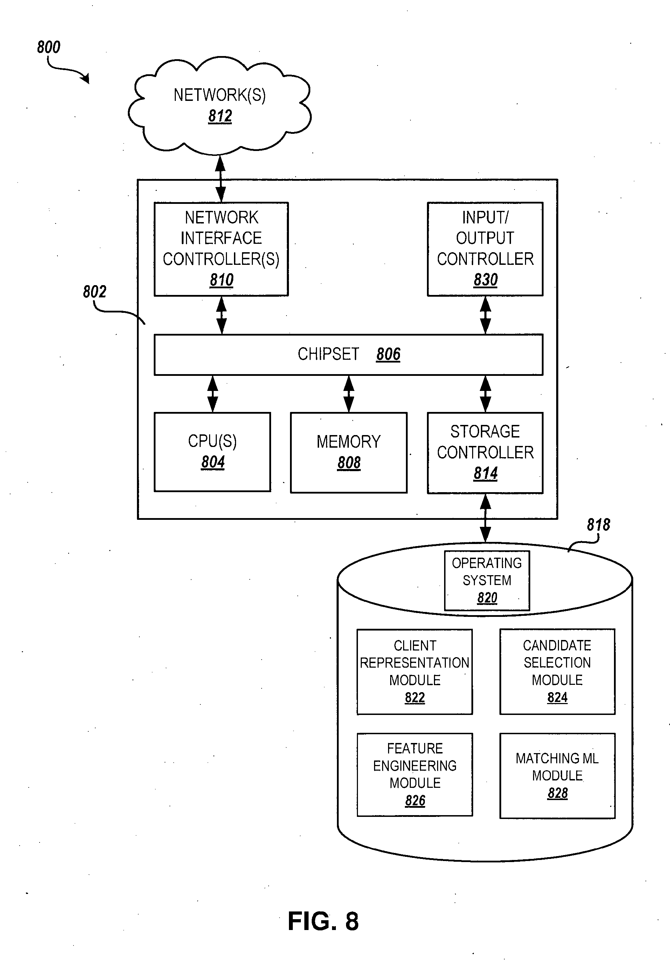

**Figure 8** illustrates an example computer architecture 800 for a computer 802 capable of executing the software components described herein for the sending/receiving and processing of tasks for the CA components. The computer architecture 800 (also referred to herein as a "server") shown in Figure 8 illustrates a server computer, workstation, desktop computer, laptop, or other computing device, and was utilized to execute any aspects of the software components presented herein described as executing on a host server, or other computing platform. The computer 802 preferably includes a baseboard, or "motherboard," which is a printed circuit board to which a multitude of components or devices was connected by way of a communication bus or other electrical communication paths. In one illustrative embodiment, one or more central processing units (CPUs) 804 operate in conjunction with a chipset 806. The CPUs 804 can be programmable processors that perform arithmetic and logical operations necessary for the operation of the computer 802.

The CPUs 804 preferably perform operations by transitioning from one discrete, physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements was combined to create more complex logic circuits, including registers, adders-subtractors, arithmetic logic units, floating-point units, or the like.

The chipset 806 provides an interface between the CPUs 804 and the remainder of the components and devices on the baseboard. The chipset 806 may provide an interface to a memory 808. The memory 808 may include a random-access memory (RAM) used as the main memory in the computer 802. The memory 808 may further include a computer-readable storage medium such as a read-only memory (ROM) or non-volatile RAM (NVRAM) for storing basic routines that that help to startup the computer 802 and to transfer information between the various components and devices. The ROM or NVRAM may also store other software components necessary for the operation of the computer 802 in accordance with the embodiments described herein.

According to various embodiments, the computer 802 may operate in a networked environment using logical connections to remote computing devices through one or more networks 812, a local-area network (LAN), a wide-area network (WAN), the Internet, or any other networking topology known in the art that connects the computer 802 to the devices and other remote computers. The chipset 806 includes functionality for providing network connectivity through one or more network interface controllers (NICs) 810, such as a gigabit Ethernet adapter. For example, the NIC 810 may be capable of connecting the computer 802 to other computer devices in the utility provider's systems. It should be appreciated that any number of NICs 810 may be present in the computer 802, connecting the computer to other types of networks and remote computer systems beyond those described herein.

The computer 802 may be connected to at least one mass storage device 818 that provides non-volatile storage for the computer 802. The mass storage device 818 may store system programs, application programs, other program modules, and data, which are described in greater detail herein. The mass storage device 818 may be connected to the computer 802 through a storage controller 814 connected to the chipset 806. The mass storage device 818 may consist of one or more physical storage units. The storage controller 814 may interface with the physical storage units through a serial attached SCSI (SAS) interface, a serial advanced technology attachment (SATA) interface, a fiber channel (FC) interface, or other standard interface for physically connecting and transferring data between computers and physical storage devices.

The computer 802 may store data on the mass storage device 818 by transforming the physical state of the physical storage units to reflect the information being stored. The specific transformation of physical state may depend on various factors, in different embodiments of the invention of this description. Examples of such factors may include, but are not limited to, the technology used to implement the physical storage units, whether the mass storage device 818 is characterized as primary or secondary storage, or the like. For example, the computer 802 may store information to the mass storage device 818 by issuing instructions through the storage controller 814 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computer 802 may further read information from the mass storage device 818 by detecting the physical states or characteristics of one or more particular locations within the physical storage units.

The mass storage device 818 may store an operating system 820 utilized to control the operation of the computer 802. According to some embodiments, the operating system includes the LINUX operating system. According to another embodiment, the operating system includes the WINDOWS® SERVER operating system from MICROSOFT Corporation of Redmond, Wash. According to further embodiments, the operating system may include the UNIX or SOLARIS operating systems. It should be appreciated that other operating systems may also be utilized. The mass storage device 818 may store other system or application programs and data utilized by the computer 802, such as a client representation module 822 (e.g., representation model 162), a candidate selection module 824 (e.g., candidate selection model 164), a feature engineering module 826 (e.g., feature engineering model 166), and a matching machine learning module 828 (e.g., matching machine learning model 168), according to embodiments described herein.

In some embodiments, the mass storage device 818 may be encoded with computer-executable instructions that, when loaded into the computer 802, transforms the computer 802 from being a general-purpose computing system into a special-purpose computer capable of implementing the embodiments described herein. These computer-executable instructions transform the computer 802 by specifying how the CPUs 804 transition between states, as described above. According to some embodiments, from the data matching server(s) 150 perspective, the mass storage device 818 stores computer-executable instructions that, when executed by the computer 802, perform portions of the process 500, for implementing a user representation based on matching system, as described herein. In further embodiments, the computer 802 may have access to other computer-readable storage medium in addition to or as an alternative to the mass storage device 818.

The computer 802 may also include an input/output controller 830 for receiving and processing input from a number of input devices, such as a keyboard, a mouse, a touchpad, a touch screen, an electronic stylus, or other type of input device. Similarly, the input/output controller 830 may provide output to a display device, such as a computer monitor, a flat-panel display, a digital projector, a printer, a plotter, or other type of output device. It will be appreciated that the computer 802 may not include all of the components shown in Figure 8, may include other components that are not explicitly shown in Figure 8, or may utilize an architecture completely different than that shown in Figure 8.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically includes computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

**Claims**

1. A computer-implemented method comprising:

receiving (510), at a data matching server (150), a matching request (210) associated with a user of a plurality of users;
obtaining (520), based on the matching request, event search data for a plurality of events for the plurality of users, the event search data comprising one or more sets of search event attributes for the plurality of users;
generating (530) a merged user representation for a plurality of candidates associated with the plurality of users based on the event search data;
selecting (540) a subset of candidates from the plurality of candidates based on the merged user representation;
determining (550) pairwise features based on similarities between the subset of the candidates;
determining a learned user representation by identifying (560), using a machine learning algorithm, at least one user of the plurality of users from the subset of the candidates based on the pairwise features, wherein the machine learning algorithm determines matching probabilities associated with the at least one identified user; and

providing (570) the learned user representation associated with the at least one identified user of the plurality of users.

2. The computer-implemented method of claim 1, wherein generating (530) the merged user representation for the plurality of candidates associated with the plurality of users comprises determining similarity matrices for each candidate by creating embeddings (410) for each user based on the event search data.

3. The computer-implemented method of claim 1 or 2, wherein generating (530) the merged user representation for the plurality of candidates associated with the plurality of users is based on natural language processing of the event search data.

4. The computer-implemented method of claim 1, wherein the event search data comprises a plurality of search history addresses, and wherein generating (530) the merged user representations for the plurality of candidates comprises:

generating (310) a token for each search history address;
generating combinations of consecutive tokens;
randomizing an order of the combinations of the consecutive tokens; and
determining the merged user representations for the plurality of candidates based on the randomized order of the combinations of the consecutive tokens utilizing natural language processing techniques.

5. The computer-implemented method of any preceding claim, wherein selecting (540) the subset of candidates from the plurality of candidates based on the merged user representation comprises filtering the plurality of candidates from potential candidates for each of the plurality of candidates using the similarity score calculated from the associated merged user representation.

6. The computer-implemented method of any preceding claim, wherein the search event attributes associated with the user and the plurality of users comprises non-personal identifying information.

7. The computer-implemented method of any preceding claim, wherein the search event attributes comprise behavioral data associated with the plurality of users.

8. The computer-implemented method of claim 7, wherein the behavioral data comprises interactions with one or more websites associated with an event, a session duration, content displayed during an interaction with one or more websites, or a combination thereof.

9. The computer-implemented method of any preceding claim, wherein determining (550) the pairwise features based on similarities between the subset of the candidates comprises determining multiple sets of features.

10. The computer-implemented method of claim 9, wherein the multiple sets of the features comprise user preference information, user behavior information, similarity information, or a combination thereof.

11. The computer-implemented method of any preceding claim, wherein the machine learning algorithm comprises a binary classifier configured to identify and remove duplicate associations between a first candidate and a second candidate associated with the same user based on the pairwise features.

12. The computer-implemented method of any preceding claim, wherein providing the learned user representation comprises:
providing expected click through rate (CTR) data associated with the user based on the learned user representation.

13. The computer-implemented method of any preceding claim, wherein the plurality of events is associated with a particular travel event, and the event search data comprises travel information based on each of the plurality of travel events.

14. The computer-implemented method of any preceding claim, wherein the event search data comprises origin and destination information, a user identification (ID), a departure date, a trip duration, or a combination thereof.

15. A computing apparatus (802) comprising:

one or more processors (804);

at least one memory device (808) coupled with the one or more processors; and

a data communications interface operably associated with the one or more processors, wherein the at least one memory device contains a plurality of program instructions that, when executed by the one or more processors, cause the computing apparatus to perform the method of any one of claims 1 to 14.

16. A non-transitory computer storage medium encoded with a computer program, the computer program comprising a plurality of program instructions that when executed by one or more processors cause the one or more processors to perform a method according to any one of claims 1 to 14.

FIG. 1

200

Matching
Request
**210**

Matching
Instruction Set
**160**

Matching
Results
**230**

212

Digital ID Data
Query Data

Matching Protocol
**220**

232

User match data:
Candidate and
associated probabilities

222 — Behavior Analysis
(User Representation Learning)

224 — Candidate Selection/Filtering

226 — Feature Engineering

228 — Matching Machine Learning Model

# FIG. 2

**300**

**302**

**310**
**Search history representation**

Unsupervised (*to deal with data sparseness*):
- Tokenize each url
- Put tokens from all urls in the pool of orderless tokens
- Use NLP to learn a user representation

Supervised:
- Enhance the unsupervised representation of urls with Siamese Networks

URL
- URL1
- URL2
- URL3

- NCE:MAD
- DUS:BEG
- MAD:NCE

- 17/03/2021
- 21/04/2021
- 09/05/2021

**335**
**Other features**

**320**
**OnD representation**
1. Extract all historical OnDs
2. Use NLP to learn traveler OnD preference

**330**
**Travel date representation**
1. Extract all historical search dates
2. Use NLP to learn travel dates preference

**340** Intermediate integration using dissimilarity representations

**350** Merged traveler representation

**FIG. 3**

EP 4 383 177 A1

**FIG. 4**

500 ⌐

┌─────────────────────────────────────────┐
│  Receive a user matching request from a requestor  │  ⌐ 510
│  associated with one or more users of a plurality of users  │
└─────────────────────────────────────────┘
                      │
                      ▼
┌─────────────────────────────────────────┐
│  Obtain, based on the user matching request, event search  │  ⌐ 520
│  data for a plurality of search events for the plurality of  │
│  users  │
└─────────────────────────────────────────┘
                      │
                      ▼
┌─────────────────────────────────────────┐
│  Generate a merged user representation for a plurality of  │  ⌐ 530
│  candidates associated with the plurality of users based on  │
│  the event search data  │
└─────────────────────────────────────────┘
                      │
                      ▼
┌─────────────────────────────────────────┐
│  Select a subset of candidates from the plurality of  │  ⌐ 540
│  candidates based on the merged user representation  │
└─────────────────────────────────────────┘
                      │
                      ▼
┌─────────────────────────────────────────┐
│  Determine pairwise features based on similarities between  │  ⌐ 550
│  the subset of the candidates  │
└─────────────────────────────────────────┘
                      │
                      ▼
┌─────────────────────────────────────────┐
│  Identify at least one user of the plurality of users from the  │  ⌐ 560
│  subset of the candidates based on the pairwise features  │
│  and utilizing a machine learning algorithm  │
└─────────────────────────────────────────┘
                      │
                      ▼
┌─────────────────────────────────────────┐
│  Provide a learned user representation associated with the  │  ⌐ 570
│  at least one identified user of the plurality of users to the  │
│  requestor  │
└─────────────────────────────────────────┘

# FIG. 5

600

Machine Learning
Server(s)
**602**

ML Training
Data
**170**

610

Start

Retrieve client records    611

Compute feature vectors    612

Initialise machine
learning model    613

617

Update model
parameters

Train model    614

Test/cross-validate
model    615

616

No ◇ OK? Yes

Save model
representation    618

End

**FIG. 6**

FIG. 7

*800*

NETWORK(S)
*812*

*802*

NETWORK
INTERFACE
CONTROLLER(S)
*810*

INPUT/
OUTPUT
CONTROLLER
*830*

CHIPSET   *806*

CPU(S)
*804*

MEMORY
*808*

STORAGE
CONTROLLER
*814*

*818*

OPERATING
SYSTEM
*820*

CLIENT
REPRESENTATION
MODULE
*822*

CANDIDATE
SELECTION
MODULE
*824*

FEATURE
ENGINEERING
MODULE
*826*

MATCHING ML
MODULE
*828*

**FIG. 8**

Europäisches
Patentamt

European
Patent Office

Office européen
des brevets

**EUROPEAN SEARCH REPORT**

Application Number

EP 22 31 5310

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/080362 A1 (ACUNA AGOST RODRIGO [FR] ET AL) 14 March 2019 (2019-03-14) * abstract * * paragraph [0011] – paragraph [0069] * ----- | 1-16 | INV. G06Q30/0251 |
| A | US 2021/232706 A1 (PERUSKI JONATHON C [US] ET AL) 29 July 2021 (2021-07-29) * abstract * * paragraph [0023] – paragraph [0079] * ----- | 1-16 | |

**TECHNICAL FIELDS SEARCHED (IPC)**

G06Q

The present search report has been drawn up for all claims

| Place of search | Date of completion of the search | Examiner |
|---|---|---|
| The Hague | 17 May 2023 | Lozza, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................
& : member of the same patent family, corresponding document

EPO FORM 1503 03.82 (P04C01)

33

## ANNEX TO THE EUROPEAN SEARCH REPORT
## ON EUROPEAN PATENT APPLICATION NO.

EP 22 31 5310

This annex lists the patent family members relating to the patent documents cited in  the above-mentioned European search report.
The members are as contained in the European Patent Office EDP file on
The European Patent Office is in no way liable for these particulars which are merely given for the purpose of information.

17-05-2023

| Patent document cited in search report | Publication date | Patent family member(s) | Publication date |
|---|---|---|---|
| US 2019080362 A1 | 14-03-2019 | NONE | |
| US 2021232706 A1 | 29-07-2021 | NONE | |

EPO FORM P0459

For more details about this annex : see Official Journal of the European Patent Office, No. 12/82